(19) **Europäisches Patentamt / European Patent Office / Office européen des brevets**

(11) **EP 3 611 955 A1**

(12) **EUROPEAN PATENT APPLICATION**
published in accordance with Art. 153(4) EPC

(43) Date of publication:
**19.02.2020 Bulletin 2020/08**

(21) Application number: **18805843.2**

(22) Date of filing: **02.03.2018**

(51) Int Cl.:
**H04W 24/00** $^{(2009.01)}$     **H04L 29/06** $^{(2006.01)}$

(86) International application number:
**PCT/CN2018/077935**

(87) International publication number:
**WO 2018/214610 (29.11.2018 Gazette 2018/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.05.2017 CN 201710385247
19.10.2017 CN 201710977122**

(71) Applicant: **Huawei Technologies Co., Ltd.
Longgang District
Shenzhen, Guangdong 518129 (CN)**

(72) Inventors:
- **LIN, Gaoquan
  Shenzhen
  Guangdong 518129 (CN)**
- **LAN, Yu
  Shenzhen
  Guangdong 518129 (CN)**

(74) Representative: **Epping - Hermann - Fischer
Patentanwaltsgesellschaft mbH
Schloßschmidstraße 5
80639 München (DE)**

(54) **METHOD, DEVICE AND SYSTEM FOR SENDING AND RECEIVING DATA PACKET**

(57) Embodiments of this application provide a data packet sending method, a data packet receiving method, a device, and a system, and relate to the field of communications technologies. The method includes: determining, by a second device, first time information, and sending a data packet to a first device, where the data packet includes the first time information; after receiving the data packet sent by the second device, determining, by the first device, second time information, and then determining a transmission delay of the data packet between the second device and the first device based on the first time information and the second time information, where the first time information is used to indicate a time at which the data packet arrives at a first wireless protocol layer in a user plane protocol stack of the second device, a header of the data packet is a header of the first wireless protocol layer, the second time information is used to indicate a time at which the data packet leaves a second wireless protocol layer in a user plane protocol stack of the first device, and the header of the data packet is parsed at the second wireless protocol layer. Because the first time information and the second time information are introduced, measurement of the transmission delay of the data packet in an NR system is implemented.

FIG. 2

**Description**

This application claims priority to Chinese Patent Application No. 201710385247.3, filed with the Chinese Patent Office on May 26, 2017 and entitled "DATA PACKET SENDING METHOD, DATA PACKET RECEIVING METHOD, DEVICE, AND SYSTEM", and to Chinese Patent Application No. 201710977122.X, filed with the Chinese Patent Office on October 19, 2017 and entitled "DATA PACKET SENDING METHOD, DATA PACKET RECEIVING METHOD, DEVICE, AND SYSTEM", which are incorporated herein by reference in their entireties.

**TECHNICAL FIELD**

This application relates to the field of communications technologies, and in particular, to a data packet sending method, a data packet receiving method, a device, and a system.

**BACKGROUND**

In a wireless communications system, because a channel environment may change with change of time and space, when the channel environment changes, a transmission delay of a data packet between devices is affected. Generally, a base station evaluates reliability of data packet transmission by a terminal device by measuring a transmission delay of a data packet between the base station and the terminal device.

A new radio (New Radio, NR) system has a higher requirement on a transmission delay and transmission reliability of a data packet between a base station and a terminal device. A manner of measuring the transmission delay in the prior art is no longer applicable to the NR system.

**SUMMARY**

Embodiments of this application provide a data packet sending method, a data packet receiving method, a device, and a system, to help improve accuracy of measurement of a transmission delay of a data packet in an NR system.

According to a first aspect, a data packet sending method is provided, including:
A first device receives a data packet sent by a second device, where the data packet includes first time information that the data packet arrives at a packet data convergence protocol (Packet Data Convergence Protocol, PDCP) layer of the second device, determines second time information that the data packet leaves a PDCP layer of the first device, and then determines a transmission delay of the data packet between the second device and the first device based on the first time information and the second time information.

In this embodiment of this application, the first time information and the second time information are introduced to determine the transmission delay of the data packet between the second device and the first device. However, in this embodiment of this application, it is determined that the transmission delay of the data packet between the second device and the first device complies with the transmission delay of the data packet defined in the NR system. Therefore, when the technical solution in this embodiment of this application is applied to the NR system, accuracy of measurement of the transmission delay of the data packet is improved.

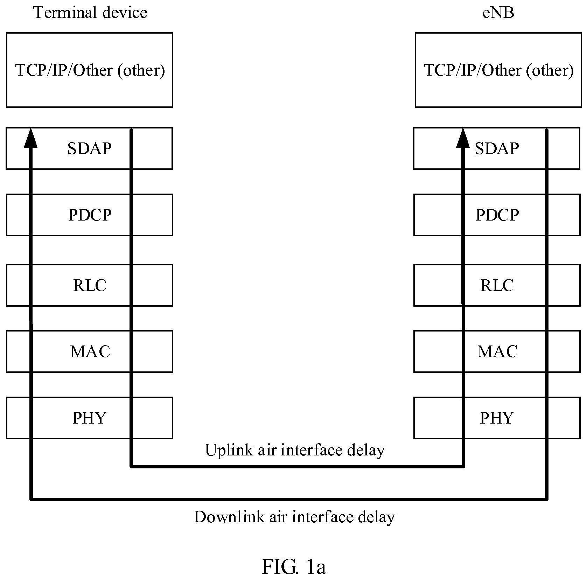

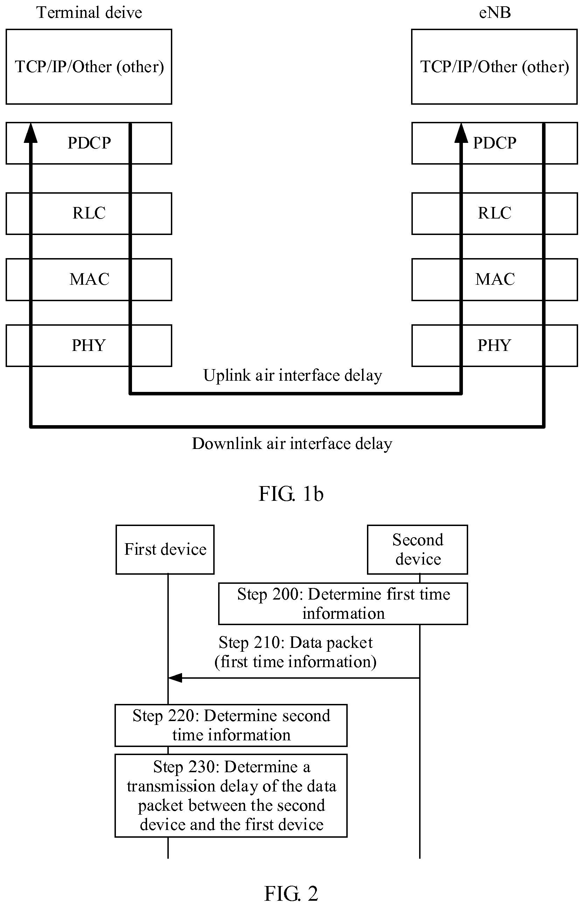

It should be noted that, in this embodiment of this application, for data, the first device is a receive end, and the second device is a transmit end. That the data packet arrives at the PDCP layer of the second device means that the data packet that has been processed at an upper layer of the PDCP layer of the second device and that needs to be sent to the first device is received at the PDCP layer of the second device. That the data packet leaves the PDCP layer of the first device means that after the data packet is processed at the PDCP layer of the first device, the data packet is sent to an upper layer of the PDCP layer of the first device. FIG. 1 is used as an example. If the first device is an eNB, the upper layer of the PDCP layer is a network protocol (Internet Protocol, IP) layer/a user datagram protocol (User Datagram Protocol, UDP) layer/other (another) layer.

Based on the first aspect, in a possible design, the first time information includes first absolute time information or first relative time information. The second time information includes second absolute time information or second relative time information.

When the first time information is the first relative time information and the second time information is the second relative time information, this helps reduce a quantity of bytes used to indicate the first time information and the second time information, and therefore helps improve data packet transmission efficiency.

For example, the first time information and the second time information may be implemented in a form of a timestamp.

Based on the first aspect, in a possible design, the first relative time information may be first frame information, and/or the second relative time information may be second frame information.

The first frame information may be frame information used to carry the data packet when the data packet is received at the PDCP layer of the second device, for example, information such as a radio frame number, a subframe number, and an offset, or other identification information that identifies the radio frame number, the subframe number, and the offset. This is not limited herein.

Based on the first aspect, in a possible design, the first relative time information includes a first offset, and a first radio frame number and a first subframe number that are used when the data packet is received at the PDCP layer of the second device, and the first offset is used to indicate an offset of the data packet in a subframe identified by the first subframe number.

In a communications system, the data packet may be transmitted by using a radio frame, and therefore, an offset, a radio frame number, and a subframe number may be used to indicate a time at which the data packet is received at the PDCP layer of the second device.

Based on the first aspect, in a possible design, the first relative time information is used to indicate a interval that a first moment deviates from a first target moment, the first moment is a time at which the data packet is received at the PDCP layer of the second device, the first target moment is a start moment of a period in which the first moment is located, and duration of the period in which the first moment is located is preset duration.

Determining the first relative time information in a predefined manner helps reduce the quantity of bytes used to indicate the first time information, thereby improving the data packet transmission efficiency.

Based on the first aspect, in a possible design, the second relative time information includes a second offset, and a second radio frame number and a second subframe number that are used when the data packet is sent at the PDCP layer of the first device, and the second offset is used to indicate an offset of the data packet in a subframe identified by the second subframe number.

Based on the first aspect, in a possible design, the transmission delay $T$ of the data packet between the second device and the first device meets the following expression:

$$T = \begin{cases} (SFN_2 - SFN_1) \times T_f + (SSFN_2 - SSFN_1) \times T_{sf} + (SOFF_2 - SOFF_1) & SFN_2 \geq SFN_1; \\ T_0 + (SFN_2 - SFN_1) \times T_f + (SSFN_2 - SSFN_1) \times T_{sf} + (SOFF_2 - SOFF_1) & SFN_2 < SFN_1. \end{cases},$$

where $SFN_1$ is the first radio frame number, $SSFN_1$ is the first subframe number, $SOFF_1$ is the first offset, $SFN_2$ is the second radio frame number, $SSFN_2$ is the second subframe number, $SOFF_2$ is the second offset, $T_f$ is duration of a radio frame, $T_{sf}$ is duration of a subframe, and $T_0$ is duration used for one cycle of a radio frame number.

By using the foregoing technical solution, the transmission delay of the data packet between the second device and the first device can be accurately determined.

Base on the first aspect, in a possible design, the second relative time information is used to indicate a interval that a second moment deviates from a second target moment, the second moment is a time at which the data packet is sent at the PDCP layer of the first device, the second target moment is a start moment of a period in which the second moment is located, and duration of the period in which the second moment is located is the preset duration.

Based on the first aspect, in a possible design, the transmission delay $T$ of the data packet between the second device and the first device meets the following expression:

$$T = \begin{cases} T_2 - T_1 & T_2 > T_1; \\ T_z + (T_2 - T_1) & T_2 \leq T_1. \end{cases},$$

where $T_1$ is the first relative time information, $T_2$ the second relative time information, and $T_z$ is the preset duration.

By using the foregoing technical solution, complexity of determining the transmission delay of the data packet can be reduced based on accurately determining the transmission delay of the data packet between the second device and the first device.

Based on the first aspect, in a possible design, the data packet further includes a first identifier. The first identifier is used to identify a format used for the first time information.

During specific implementation, the first device may use the following manner to determine the second time information that the data packet leaves the PDCP layer of the first device:
the first device determines, based on the format that is used for the first time information and that is identified by the first identifier, the second time information that the data packet leaves the PDCP layer of the first device.

By using the foregoing technical solution, a same format is used for the first time information and the second time information, thereby simplifying a manner of determining the transmission delay of the data packet between the first device and the second device.

Based on the first aspect, in a possible design, the first time information and the first identifier are carried in a PDCP header of the data packet.

Based on the first aspect, in a possible design, when the first device is a terminal device and the second device is a network device, the first device further sends the transmission delay to the second device.

When the first device is a terminal device and the second device is a network device, the first device further sends the transmission delay to the second device. This helps the network device evaluate reliability of a data packet in communication of the terminal device.

For example, the first device may send the transmission delay to the second device each time after determining the transmission delay of the data packet; or the first device may send, to the second device every preset duration, transmission delays of all data packets determined by the first device in the preset duration. In addition, the first device may alternatively send transmission delays of a preset quantity of data packets to the second device each time after determining the transmission delays of the preset quantity of data packets, or the first device is triggered by an event to send the transmission delay of the data packet to the second device, for example, the determined transmission delay of the data packet is greater than a specific threshold. It should be further noted that the first device may further collect statistics about an average value of determined transmission delays of all the data packets every preset duration, and send the average value of the transmission delays to the second device, or the first device collects statistics about the transmission delays of the preset quantity of data packets each time after determining the transmission delays of the preset quantity of data packets, for example, determines an average value of the transmission delays of the preset quantity of data packets, and sends a statistical result of the statistical transmission delays of the data packets to the second device.

According to a second aspect, an embodiment of this application provides a data packet sending method, including:

A second device determines first time information that a data packet arrives at a PDCP layer of the second device, and sends the data packet to a first device, where the data packet includes the first time information, so that the first device determines, based on the first time information, a transmission delay of the data packet between the second device and the first device.

In this embodiment of this application, when the second device sends the data packet, the first time information is introduced, so that the first device can determine the transmission delay of the data packet based on the first time information. However, in this embodiment of this application, this manner of determining the transmission delay of the data packet complies with a definition of the transmission delay of the data packet in the NR system. Therefore, when the technical solution in this embodiment of this application is applied to the NR system, accuracy of measurement of the transmission delay of the data packet is improved.

Based on the second aspect, in a possible design, the first time information includes first absolute time information or first relative time information.

When the first time information is the first relative time information and second time information is second relative time information, this helps reduce a quantity of bytes used to indicate the first time information and the second time information, and therefore helps improve data packet transmission efficiency.

For example, the first time information may be implemented in a form of a timestamp.

Based on the second aspect, in a possible design, the first relative time information may be first frame information.

The first frame information may be frame information used to carry the data packet when the data packet is received at the PDCP layer of the second device, for example, information such as a radio frame number, a subframe number, and an offset, or other identification information that identifies the radio frame number, the subframe number, and the offset. This is not limited herein.

Based on the second aspect, in a possible design, the first relative time information includes a first offset, and a first radio frame number and a first subframe number that are used when the data packet is received at the PDCP layer of the second device, and the first offset is used to indicate an offset of the data packet in a subframe identified by the first subframe number.

In a communications system, the data packet may be transmitted by using a radio frame, and therefore, an offset, a radio frame number, and a subframe number may be used to indicate a time at which the data packet is received at the PDCP layer of the second device.

Based on the second aspect, in a possible design, the first relative time information is used to indicate a interval that a first moment deviates from a first target moment, the first moment is a time at which the data packet is received at the PDCP layer of the second device, the first target moment is a start moment of a period in which the first moment is located, and duration of the period in which the first moment is located is preset duration.

Determining the first relative time information in a predefined manner helps reduce the quantity of bytes used to indicate the first time information, thereby improving the data packet transmission efficiency.

Based on the second aspect, in a possible design, the data packet further includes a first identifier. The first identifier is used to identify a format used for the first time information.

By using the foregoing technical solution, the second device may notify the first device of the format used for the first time information, so that the first device can use a same format as that used for the first time information when determining the second time information. This helps simplify a manner of determining the transmission delay of the data packet between the first device and the second device.

Based on the second aspect, in a possible design, the first time information and the first identifier are carried in a PDCP header of the data packet.

Based on the second aspect, in a possible design, when the first device is a terminal device and the second device is a network device, the second device further receives the transmission delay of the data packet that is between the first device and the second device and that is sent by the first device, and presents the transmission delay in a form of a log or traffic statistics.

When the first device is a terminal device and the second device is a network device, the second device further receives the transmission delay sent by the first device. This helps the network device evaluate reliability of a data packet in communication of the terminal device.

For example, when the first device sends the transmission delay of the data packet to the second device each time after determining the transmission delay of the data packet, the second device directly receives the transmission delay of the data packet. When the first device sends, to the second device every preset duration, transmission delays of all data packets determined by the first device in the preset duration, the second device may periodically receive the transmission delays of the data packets sent by the first device. In addition, after determining the transmission delays of a preset quantity of data packets, the first device sends the transmission delays of the preset quantity of data packets to the second device, and the second device may receive the preset quantity of transmission delays; or the first device may be triggered by an event to send the transmission delay of the data packet to the second device, for example, the determined transmission delay of the data packet is greater than a specific threshold. It should be further noted that the first device may further collect statistics about an average value of determined transmission delays of all the data packets every preset duration, and send the average value of the transmission delays to the second device, or the first device collects statistics about transmission delays of the preset quantity of data packets each time after determining the transmission delays of the preset quantity of data packets, for example, determines an average value of the transmission delays of the preset quantity of data packets, and sends a statistical result of the statistical transmission delays of the data packets to the second device.

According to a third aspect, an embodiment of this application provides a data packet receiving device. The device includes a transceiver and a processor, where the transceiver is configured to receive a data packet sent by a second device, and the data packet includes first time information that the data packet arrives at a packet data convergence protocol PDCP layer of the second device; and the processor is configured to: determine second time information that the data packet leaves the PDCP layer of the device, and determine a transmission delay of the data packet between the second device and the device based on the first time information and the second time information.

Based on the third aspect, in a possible design, the first time information includes first absolute time information or first relative time information. The second time information includes second absolute time information or second relative time information.

Based on the third aspect, in a possible design, the first relative time information includes a first offset, and a first radio frame number and a first subframe number that are used when the data packet is received at the PDCP layer of the second device, and the first offset is used to indicate an offset of the data packet in a subframe identified by the first subframe number.

Based on the third aspect, in a possible design, the first relative time information is used to indicate a interval that a first moment deviates from a first target moment, the first moment is a time at which the data packet is received at the PDCP layer of the second device, the first target moment is a start moment of a period in which the first moment is located, and duration of the period in which the first moment is located is preset duration.

Based on the third aspect, in a possible design, the second relative time information includes a second offset, and a second radio frame number and a second subframe number that are used when the data packet is sent at the PDCP layer of the device, and the second offset is used to indicate an offset of the data packet in a subframe identified by the second subframe number.

Based on the third aspect, in a possible design, the transmission delay $T$ of the data packet between the second device and the device meets the following expression:

$$T = \begin{cases} (SFN_2 - SFN_1) \times T_f + (SSFN_2 - SSFN_1) \times T_{sf} + (SOFF_2 - SOFF_1) & SFN_2 \geq SFN_1; \\ T_0 + (SFN_2 - SFN_1) \times T_f + (SSFN_2 - SSFN_1) \times T_{sf} + (SOFF_2 - SOFF_1) & SFN_2 < SFN_1. \end{cases}$$

where $SFN_1$ is the first radio frame number, $SSFN_1$ is the first subframe number, $SOFF_1$ is the first offset, $SFN_2$ is the

second radio frame number, $SSFN_2$ is the second subframe number, $SOFF_2$ is the second offset, $T_f$ is duration of a radio frame, $T_{sf}$ is duration of a subframe, and $T_0$ is duration used for one cycle of a radio frame number.

Base on the third aspect, in a possible design, the second relative time information is used to indicate a interval that a second moment deviates from a second target moment, the second moment is a time at which the data packet is sent at the PDCP layer of the device, the second target moment is a start moment of a period in which the second moment is located, and duration of the period in which the second moment is located is the preset duration.

Based on the third aspect, in a possible design, the transmission delay $T$ of the data packet between the second device and the device meets the following expression:

$$T = \begin{cases} T_2 - T_1 & T_2 > T_1; \\ T_z + (T_2 - T_1) & T_2 \leq T_1. \end{cases},$$

where $T_1$ is the first relative time information, $T_2$ the second relative time information, and $T_z$ is the preset duration.

Based on the third aspect, in a possible design, the data packet further includes a first identifier. The first identifier is used to identify a format used for the first time information.

That the processor is configured to determine the second time information that the data packet leaves the PDCP layer of the device specifically includes:

the processor is configured to determine, based on the format that is used for the first time information and that is identified by the first identifier, the second time information that the data packet leaves the PDCP layer of the device.

Based on the third aspect, in a possible design, the first time information and the first identifier are carried in a PDCP header of the data packet.

Based on the third aspect, in a possible design, when the device is a terminal device and the second device is a network device, the transceiver is further configured to send the transmission delay to the second device.

According to a fourth aspect, an embodiment of this application further provides a data packet receiving device. The device includes a transceiver unit and a processing unit, where the transceiver unit is configured to receive a data packet sent by a second device, and the data packet includes first time information that the data packet arrives at a packet data convergence protocol PDCP layer of the second device; and the processing unit is configured to: determine second time information that the data packet leaves the PDCP layer of the device, and determine a transmission delay of the data packet between the second device and the device based on the first time information and the second time information.

Based on the fourth aspect, in a possible design, the first time information includes first absolute time information or first relative time information. The second time information includes second absolute time information or second relative time information.

Based on the fourth aspect, in a possible design, the first relative time information includes a first offset, and a first radio frame number and a first subframe number that are used when the data packet is received at the PDCP layer of the second device, and the first offset is used to indicate an offset of the data packet in a subframe identified by the first subframe number.

Based on the fourth aspect, in a possible design, the first relative time information is used to indicate a interval that a first moment deviates from a first target moment, the first moment is a time at which the data packet is received at the PDCP layer of the second device, the first target moment is a start moment of a period in which the first moment is located, and duration of the period in which the first moment is located is preset duration.

Based on the fourth aspect, in a possible design, the second relative time information includes a second offset, and a second radio frame number and a second subframe number that are used when the data packet is sent at the PDCP layer of the device, and the second offset is used to indicate an offset of the data packet in a subframe identified by the second subframe number.

Based on the fourth aspect, in a possible design, the transmission delay $T$ of the data packet between the second device and the device meets the following expression:

$$T = \begin{cases} (SFN_2 - SFN_1) \times T_f + (SSFN_2 - SSFN_1) \times T_{sf} + (SOFF_2 - SOFF_1) & SFN_2 \geq SFN_1; \\ T_0 + (SFN_2 - SFN_1) \times T_f + (SSFN_2 - SSFN_1) \times T_{sf} + (SOFF_2 - SOFF_1) & SFN_2 < SFN_1. \end{cases},$$

where $SFN_1$ is the first radio frame number, $SSFN_1$ is the first subframe number, $SOFF_1$ is the first offset, $SFN_2$ is the second radio frame number, $SSFN_2$ is the second subframe number, $SOFF_2$ is the second offset, $T_f$ is duration of a radio frame, $T_{sf}$ is duration of a subframe, and $T_0$ is duration used for one cycle of a radio frame number.

Base on the fourth aspect, in a possible design, the second relative time information is used to indicate a interval that a second moment deviates from a second target moment, the second moment is a time at which the data packet is sent at the PDCP layer of the device, the second target moment is a start moment of a period in which the second moment is located, and duration of the period in which the second moment is located is the preset duration.

Based on the fourth aspect, in a possible design, the transmission delay $T$ of the data packet between the second device and the device meets the following expression:

$$T = \begin{cases} T_2 - T_1 & T_2 > T_1; \\ T_z + (T_2 - T_1) & T_2 \leq T_1. \end{cases},$$

where $T_1$ is the first relative time information, $T_2$ the second relative time information, and $T_z$ is the preset duration.

Based on the fourth aspect, in a possible design, the data packet further includes a first identifier. The first identifier is used to identify a format used for the first time information.

That the processing unit is configured to determine the second time information that the data packet leaves the PDCP layer of the device specifically includes:

the processing unit is configured to determine, based on the format that is used for the first time information and that is identified by the first identifier, the second time information that the data packet leaves the PDCP layer of the device.

Based on the fourth aspect, in a possible design, the first time information and the first identifier are carried in a PDCP header of the data packet.

Based on the fourth aspect, in a possible design, when the device is a terminal device and the second device is a network device, the transceiver unit is further configured to send the transmission delay to the second device.

Another aspect of this application provides a computer readable storage medium. The computer readable storage medium stores an instruction. When the instruction is run on a computer, the computer is enabled to perform the method in the foregoing aspects.

Another aspect of this application provides a computer program product including an instruction. When the computer program product is run on a computer, the computer is enabled to perform the method in the foregoing aspects.

Another aspect of this application further provides a chip, where the chip is connected to a memory, and is configured to read a program instruction in the memory, to implement the technical solution in any one of the first aspect and the designs provided in the first aspect.

According to a fifth aspect, an embodiment of this application provides a data packet sending device. The device includes a processor and a transceiver. The processor is configured to determine first time information that a data packet arrives at a packet data convergence protocol PDCP layer of the device. The transceiver is configured to send the data packet to a first device, where the data packet includes the first time information, so that the first device determines a transmission delay of the data packet between the device and the first device based on the first time information.

Based on the fifth aspect, in a possible design, the first time information includes first absolute time information or first relative time information.

Based on the fifth aspect, in a possible design, the first relative time information includes a first offset, and a first radio frame number and a first subframe number that are used when the data packet is received at the PDCP layer of the device, and the first offset is used to indicate an offset of the data packet in a subframe identified by the first subframe number.

Based on the fifth aspect, in a possible design, the first relative time information is used to indicate a interval that a first moment deviates from a first target moment, the first moment is a time at which the data packet is received at the PDCP layer of the device, the first target moment is a start moment of a period in which the first moment is located, and duration of the period in which the first moment is located is preset duration.

Based on the fifth aspect, in a possible design, the data packet further includes a first identifier. The first identifier is used to identify a format used for the first time information.

Based on the fifth aspect, in a possible design, the first time information and the first identifier are carried in a PDCP header of the data packet.

Based on the fifth aspect, in a possible design, when the first device is a terminal device and the device is a network device, the transceiver is further configured to: receive the transmission delay of the data packet that is between the first device and the second device and that is sent by the first device, and present the transmission delay in a form of a log or traffic statistics.

According to a sixth aspect, an embodiment of this application further provides a data packet sending device. The device includes a processing unit and a transceiver unit. The processing unit is configured to determine first time information that a data packet arrives at a packet data convergence protocol PDCP layer of the device. The transceiver unit is configured to send the data packet to a first device, where the data packet includes the first time information, so that the first device determines a transmission delay of the data packet between the device and the first device based on the first time information.

Based on the sixth aspect, in a possible design, the first time information includes first absolute time information or first relative time information.

Based on the sixth aspect, in a possible design, the first relative time information includes a first offset, and a first radio frame number and a first subframe number that are used when the data packet is received at the PDCP layer of the device, and the first offset is used to indicate an offset of the data packet in a subframe identified by the first subframe number.

Based on the sixth aspect, in a possible design, the first relative time information is used to indicate a interval that a first moment deviates from a first target moment, the first moment is a time at which the data packet is received at the PDCP layer of the device, the first target moment is a start moment of a period in which the first moment is located, and duration of the period in which the first moment is located is preset duration.

Based on the sixth aspect, in a possible design, the data packet further includes a first identifier. The first identifier is used to identify a format used for the first time information.

Based on the sixth aspect, in a possible design, the first time information and the first identifier are carried in a PDCP header of the data packet.

Based on the sixth aspect, in a possible design, when the first device is a terminal device and the device is a network device, the transceiver unit is further configured to: receive the transmission delay of the data packet that is between the first device and the second device and that is sent by the first device, and present the transmission delay in a form of a log or traffic statistics.

Another aspect of this application provides a computer readable storage medium. The computer readable storage medium stores an instruction. When the instruction is run on a computer, the computer is enabled to perform the method in the foregoing aspects.

Another aspect of this application provides a computer program product including an instruction. When the computer program product is run on a computer, the computer is enabled to perform the method in the foregoing aspects.

Another aspect of this application further provides a chip, where the chip is connected to a memory, and is configured to read a program instruction in the memory, to implement the technical solution in any one of the second aspect and the designs provided in the second aspect.

An embodiment of this application further provides a communications system, including the device in any one of the third aspect and the designs provided in the third aspect, and the device in any one of the fifth aspect and the designs provided in the fifth aspect.

According to a seventh aspect, an embodiment of this application provides a data packet receiving method, including:

A first device receives a data packet sent by a second device, where the data packet includes first time information, determines second time information, and then determines a transmission delay of the data packet between the second device and the first device based on the first time information and the second time information. The first time information is used to indicate a time at which the data packet arrives at a first wireless protocol layer, the first wireless protocol layer is located in a user plane protocol stack of the second device, and a header of the data packet is a header of the first wireless protocol layer. The second time information is used to indicate a time at which the data packet leaves a second wireless protocol layer, the second wireless protocol layer is located in a user plane protocol stack of the first device, and the header of the data packet is parsed at the second wireless protocol layer.

In this embodiment of this application, the first time information and the second time information are introduced to determine the transmission delay of the data packet between the second device and the first device. However, in this embodiment of this application, it is determined that the transmission delay of the data packet between the second device and the first device complies with the transmission delay of the data packet defined in the NR system. Therefore, when the technical solution in this embodiment of this application is applied to the NR system, accuracy of measurement of the transmission delay of the data packet is improved.

In a possible design, the first wireless protocol layer is a PDCP layer of the second device, and the second wireless protocol layer is a PDCP layer of the first device; or the first wireless protocol layer is a service data adaptation protocol SDAP layer of the second device, and the second wireless protocol layer is an SDAP layer of the first device.

In a possible design, the first time information includes first absolute time information or first relative time information. The second time information includes second absolute time information or second relative time information.

When the first time information is the first relative time information and the second time information is the second relative time information, this helps reduce a quantity of bytes used to indicate the first time information and the second time information, and therefore helps improve data packet transmission efficiency.

For example, the first time information and the second time information may be implemented in a form of a timestamp.

In a possible design, the first relative time information includes a first offset, and a first radio frame number and a first subframe number that are used when the data packet is received at the first wireless protocol layer, and the first offset is used to indicate an offset of the data packet in a subframe identified by the first subframe number.

In a possible design, the first relative time information is used to indicate a interval that a first moment deviates from a first target moment, the first moment is a time at which the data packet is received at the first wireless protocol layer, the first target moment is a start moment of a period in which the first moment is located, and duration of the period in which the first moment is located is preset duration. Determining the first relative time information in the foregoing manner helps reduce the quantity of bytes used to indicate the first time information, thereby improving the data packet transmission efficiency.

In a possible design, the second relative time information includes a second offset, and a second radio frame number and a second subframe number that are used when the data packet is sent at the second wireless protocol layer, and the second offset is used to indicate an offset of the data packet in a subframe identified by the second subframe number.

In a possible design, the transmission delay $T$ of the data packet between the second device and the first device meets the following expression:

$$T = \begin{cases} (SFN_2 - SFN_1) \times T_f + (SSFN_2 - SSFN_1) \times T_{sf} + (SOFF_2 - SOFF_1) & SFN_2 \geq SFN_1; \\ T_0 + (SFN_2 - SFN_1) \times T_f + (SSFN_2 - SSFN_1) \times T_{sf} + (SOFF_2 - SOFF_1) & SFN_2 < SFN_1. \end{cases}$$

where $SFN_1$ is the first radio frame number used when the data packet is received at the first wireless protocol layer, $SSFN_1$ is the first subframe number used when the data packet is received at the first wireless protocol layer, $SOFF_1$ is the first offset, the first offset is used to indicate an offset of the data packet in a subframe identified by the first subframe number, $SFN_2$ is the second radio frame number used when the data packet is sent at the second wireless protocol layer, $SSFN_2$ is the second subframe number used when the data packet is sent at the second wireless protocol layer, $SOFF_2$ is the second offset, the second offset is used to indicate an offset of the data packet in a subframe identified by the second subframe number, $T_f$ is duration of a radio frame, $T_{sf}$ is duration of a subframe, and $T_0$ is duration used for one cycle of a radio frame number.

The foregoing technical solution helps accurately determine the transmission delay of the data packet between the second device and the first device.

In a possible design, the second relative time information is used to indicate a interval that a second moment deviates from a second target moment, the second moment is a time at which the data packet is sent at the second wireless protocol layer, the second target moment is a start moment of a period in which the second moment is located, and duration of the period in which the second moment is located is the preset duration.

In a possible design, the transmission delay $T$ of the data packet between the second device and the first device meets the following expression:

$$T = \begin{cases} T_2 - T_1 & T_2 > T_1; \\ T_z + (T_2 - T_1) & T_2 \leq T_1. \end{cases}$$

where $T_1$ is the first relative time information, the first relative time information is used to indicate a interval that a first moment deviates from a first target moment, the first moment is a time at which the data packet is received at the first wireless protocol layer, the first target moment is a start moment of a period in which the first moment is located, and duration of the period in which the first moment is located is $T_z$, $T_2$ is the second relative time information, the second relative time information is used to indicate a interval that a second moment deviates from a second target moment, the second moment is a time at which the data packet is sent at the second wireless protocol layer, the second target moment is a start moment of a period in which the second moment is located, and duration of the period in which the second moment is located is $T_z$, and $T_z$ is the preset duration.

By using the foregoing technical solution, complexity of determining the transmission delay of the data packet can be reduced based on accurately determining the transmission delay of the data packet between the second device and the first device.

In a possible design, the data packet further includes a first identifier. The first identifier is used to identify a format used for the first time information. During a specific implementation, the following manner can be used.

The first device determines the second time information based on the format that is used for the first time information and that is identified by the first identifier. By using the foregoing technical solution, a same format is used for the first time information and the second time information, thereby simplifying a manner of determining the transmission delay of the data packet between the first device and the second device.

According to an eighth aspect, an embodiment of this application provides a data packet sending method, including:

A second device determines first time information, and sends a data packet to a first device, where the data packet includes the first time information, the first time information is used to indicate a time at which the data packet arrives at a first wireless protocol layer, the first wireless protocol layer is located in a user plane protocol stack of the second device, and a header of the data packet is a header of the first wireless protocol layer.

In this embodiment of this application, when the second device sends the data packet, the first time information is introduced, so that the first device can determine the transmission delay of the data packet based on the first time information. However, in this embodiment of this application, this manner of determining the transmission delay of the data packet complies with a definition of the transmission delay of the data packet in the NR system. Therefore, when the technical solution in this embodiment of this application is applied to the NR system, accuracy of measurement of the transmission delay of the data packet is improved.

In a possible design, the first wireless protocol layer is a packet data convergence protocol PDCP layer of the second device; or the first wireless protocol layer is an SDAP layer of the second device.

In a possible design, the first time information includes first absolute time information or first relative time information. When the first time information is the first relative time information and second time information is second relative time information, this helps reduce a quantity of bytes used to indicate the first time information and the second time information, and therefore helps improve data packet transmission efficiency.

For example, the first time information may be implemented in a form of a timestamp.

In a possible design, the first relative time information includes a first offset, and a first radio frame number and a first subframe number that are used when the data packet is received at the first wireless protocol layer, and the first offset is used to indicate an offset of the data packet in a subframe identified by the first subframe number.

In a possible design, the first relative time information is used to indicate a interval that a first moment deviates from a first target moment, the first moment is a time at which the data packet is received at the first wireless protocol layer, the first target moment is a start moment of a period in which the first moment is located, and duration of the period in which the first moment is located is preset duration. Determining the first relative time information in the foregoing manner helps reduce the quantity of bytes used to indicate the first time information, thereby improving the data packet transmission efficiency.

In a possible design, the data packet further includes a first identifier. The first identifier is used to identify a format used for the first time information. By using the foregoing technical solution, the second device may notify the first device of the format used for the first time information, so that the first device can use a same format as that used for the first time information when determining the second time information. This helps simplify a manner of determining the transmission delay of the data packet between the first device and the second device.

According to a ninth aspect, an embodiment of this application provides a first device, including a processor and a transceiver. The transceiver id configured to receive a data packet sent by a second device, where the data packet includes first time information, the first time information is used to indicate a time at which the data packet arrives at a first wireless protocol layer, the first wireless protocol layer is located in a user plane protocol stack of the second device, and a header of the data packet is a header of the first wireless protocol layer. The processor is configured to: determine second time information, and determine a transmission delay of the data packet between the second device and the first device based on the first time information and the second time information, where the second time information is used to indicate a time at which the data packet leaves a second wireless protocol layer, the second wireless protocol layer is located in a user plane protocol stack of the first device, and the header of the data packet is parsed at the second wireless protocol layer.

In a possible design, the first wireless protocol layer is a packet data convergence protocol PDCP layer of the second device, and the second wireless protocol layer is a PDCP layer of the first device; or the first wireless protocol layer is a service data adaptation protocol SDAP layer of the second device, and the second wireless protocol layer is an SDAP layer of the first device.

In a possible design, the first time information includes first absolute time information or first relative time information. The second time information includes second absolute time information or second relative time information.

In a possible design, the first relative time information includes a first offset, and a first radio frame number and a first subframe number that are used when the data packet is received at the first wireless protocol layer, and the first offset is used to indicate an offset of the data packet in a subframe identified by the first subframe number.

In a possible design, the first relative time information is used to indicate a interval that a first moment deviates from a first target moment, the first moment is a time at which the data packet is received at the first wireless protocol layer, the first target moment is a start moment of a period in which the first moment is located, and duration of the period in which the first moment is located is preset duration.

In a possible design, the second relative time information includes a second offset, and a second radio frame number and a second subframe number that are used when the data packet is sent at the second wireless protocol layer, and the second offset is used to indicate an offset of the data packet in a subframe identified by the second subframe number.

In a possible design, the transmission delay $T$ of the data packet between the second device and the first device meets the following expression:

$$T = \begin{cases} (SFN_2 - SFN_1) \times T_f + (SSFN_2 - SSFN_1) \times T_{sf} + (SOFF_2 - SOFF_1) & SFN_2 \geq SFN_1; \\ T_0 + (SFN_2 - SFN_1) \times T_f + (SSFN_2 - SSFN_1) \times T_{sf} + (SOFF_2 - SOFF_1) & SFN_2 < SFN_1. \end{cases}$$

where $SFN_1$ is the first radio frame number used when the data packet is received at the first wireless protocol layer, $SSFN_1$ is the first subframe number used when the data packet is received at the first wireless protocol layer, $SOFF_1$ is the first offset, the first offset is used to indicate an offset of the data packet in a subframe identified by the first subframe number, $SFN_2$ is the second radio frame number used when the data packet is sent at the second wireless protocol layer, $SSFN_2$ is the second subframe number used when the data packet is sent at the second wireless protocol layer, $SOFF_2$ is the second offset, the second offset is used to indicate an offset of the data packet in a subframe identified by the second subframe number, $T_f$ is duration of a radio frame, $T_{sf}$ is duration of a subframe, and $T_0$ is duration used for one cycle of a radio frame number.

In a possible design, the second relative time information is used to indicate a interval that a second moment deviates from a second target moment, the second moment is a time at which the data packet is sent at the second wireless protocol layer, the second target moment is a start moment of a period in which the second moment is located, and duration of the period in which the second moment is located is the preset duration.

In a possible design, the transmission delay $T$ of the data packet between the second device and the first device meets the following expression:

$$T = \begin{cases} T_2 - T_1 & T_2 > T_1; \\ T_z + (T_2 - T_1) & T_2 \leq T_1. \end{cases}$$

where $T_1$ is the first relative time information, the first relative time information is used to indicate a interval that a first moment deviates from a first target moment, the first moment is a time at which the data packet is received at the first wireless protocol layer, the first target moment is a start moment of a period in which the first moment is located, and duration of the period in which the first moment is located is $T_z$, $T_2$ is the second relative time information, the second relative time information is used to indicate a interval that a second moment deviates from a second target moment, the second moment is a time at which the data packet is sent at the second wireless protocol layer, the second target moment is a start moment of a period in which the second moment is located, and duration of the period in which the second moment is located is $T_z$, and $T_z$ is the preset duration.

In a possible design, the data packet further includes a first identifier. The first identifier is used to identify a format used for the first time information.

A possible specific implementation in which the processor is configured to determine the second time information is:

the processor is configured to determine the second time information based on the format that is used for the first time information and that is identified by the first identifier.

According to a tenth aspect, an embodiment of this application provides a second device, including a processor and a transceiver, where the processor is configured to determine first time information, the first time information is used to indicate a time at which a data packet arrives at a first wireless protocol layer, the first wireless protocol layer is located in a user plane protocol stack of the second device, and a header of the data packet is a header of the first wireless protocol layer; and the transceiver is configured to send the data packet to a first device, where the data packet includes the first time information.

In a possible design, the first wireless protocol layer is a packet data convergence protocol PDCP layer of the second device; or the first wireless protocol layer is a service data adaptation protocol SDAP layer of the second device.

In a possible design, the first time information includes first absolute time information or first relative time information.

In a possible design, the first relative time information includes a first offset, and a first radio frame number and a first subframe number that are used when the data packet is received at the first wireless protocol layer, and the first offset is used to indicate an offset of the data packet in a subframe identified by the first subframe number.

In a possible design, the first relative time information is used to indicate a interval that a first moment deviates from a first target moment, the first moment is a time at which the data packet is received at the first wireless protocol layer, the first target moment is a start moment of a period in which the first moment is located, and duration of the period in which the first moment is located is preset duration.

Another aspect of this application provides a computer readable storage medium. The computer readable storage medium stores an instruction. When the instruction is run on a computer, the computer is enabled to perform the method in any one of the seventh aspect or the possible designs of the seventh aspect.

Another aspect of this application provides a computer readable storage medium. The computer readable storage medium stores an instruction. When the instruction is run on a computer, the computer is enabled to perform the method in any one of the eighth aspect or the possible designs of the eighth aspect.

Another aspect of this application provides a computer program product including an instruction. When the computer program product is run on a computer, the computer is enabled to perform the method in any one of the seventh aspect or the possible designs of the seventh aspect.

Another aspect of this application provides a computer program product including an instruction. When the computer program product is run on a computer, the computer is enabled to perform the method in any one of the eighth aspect or the possible designs of the eighth aspect.

Another aspect of this application further provides a chip, where the chip is connected to a memory, and is configured to read a program instruction in the memory, to implement the technical solution in any one of the seventh aspect and the designs provided in the seventh aspect.

Another aspect of this application further provides a chip, where the chip is connected to a memory, and is configured to read a program instruction in the memory, to implement the technical solution in any one of the eighth aspect and the designs provided in the eighth aspect.

An embodiment of this application further provides a communications system, including the device in any one of the ninth aspect and the designs provided in the ninth aspect, and the device in any one of the tenth aspect and the designs provided in the tenth aspect.

**BRIEF DESCRIPTION OF DRAWINGS**

FIG. 1a and FIG. 1b each are a schematic diagram of a transmission delay according to an embodiment of this application;

FIG. 2 is a schematic flowchart of a data packet sending and receiving method according to an embodiment of this application;

FIG. 3a to FIG. 3c each are a schematic structural diagram of first time information according to an embodiment of this application;

FIG. 4 is a schematic diagram of an offset according to an embodiment of this application;

FIG. 5 is a schematic diagram of first relative time information according to an embodiment of this application;

FIG. 6a and FIG. 6b each are a schematic structural diagram of a data packet according to an embodiment of this application;

FIG. 7a is a schematic diagram of a cloud scenario according to an embodiment of this application;

FIG. 7b is a schematic diagram of a non-cloud scenario according to an embodiment of this application;

FIG. 8 is a schematic diagram of a transmission delay calculation process according to an embodiment of this application;

FIG. 9a and FIG. 9b each are a schematic structural diagram of a data packet receiving device according to an embodiment of this application;

FIG. 10a and FIG. 10b each are a schematic structural diagram of a data packet sending device according to an embodiment of this application; and

FIG. 11 is a schematic structural diagram of a communications system according to an embodiment of this application.

**DESCRIPTION OF EMBODIMENTS**

The following describes embodiments of this application correspondingly with reference to the accompanying drawings in this specification.

For an NR system, a transmission delay of a data packet between a base station and a terminal device in a communication protocol is defined as: in an uplink communication direction or a downlink communication direction, a period of time in which the data packet or information is successfully transmitted from a service data unit (Service Data Unit, SDU) entry point of a wireless protocol layer 2 or a wireless protocol layer 3 to an SDU exit point of the wireless protocol layer 2 or the wireless protocol layer 3, regardless of whether the terminal device or the base station is limited by discontinuous reception (Discontinuous Reception, DRX).

In the embodiments of this application, for ease of determining an air interface delay of the data packet, a first wireless protocol layer in a user plane protocol stack is used as the SDU entry point, and a second wireless protocol layer in the user plane protocol stack is used as the SDU exit point. The first wireless protocol layer and the second wireless protocol layer may be a same wireless protocol layer, or may be defined as different wireless protocol layers, and may be correspondingly set based on an actual situation.

For example, generally, as shown in FIG. 1a, the user plane protocol stack includes a media access control (Media Access Control, MAC) layer, a radio link control (Radio Link Control, RLC) layer, and a PDCP layer, and a header of the data packet is a header of the PDCP layer. Therefore, optionally, the first wireless protocol layer is the PDCP layer, and the second wireless protocol layer is also the PDCP layer. A service data adaptation protocol (Service Data Adaptation Protocol, SDAP) layer located above the PDCP layer is introduced in a user plane protocol stack in 5G. As shown in FIG. 1b, when the data packet passes through the SDAP layer, and the header of the data packet becomes a header of the SDAP layer, optionally, the first wireless protocol layer is the SDAP layer, and the second wireless protocol layer is the SDAP layer. When the header of the data packet passes through the SDAP layer, and the header of the data packet is still the header of the PDCP layer, to be specific, the data packet is transparently transmitted at the SDAP layer. Optionally, the first wireless protocol layer is the PDCP layer, and the second wireless protocol layer is also the PDCP layer.

The following uses an example in which the first wireless protocol layer is the PDCP layer and the second wireless protocol layer is the PDCP layer for specific description. When the first wireless protocol layer is the SDAP layer, and the second wireless protocol layer is the SDAP layer, or the first wireless protocol layer and the second wireless protocol layer each are another layer, a manner of determining the air interface delay is similar. Details are not described herein again.

For an NR system, a transmission delay of a data packet between a base station and a terminal device in a communication protocol is defined as shown in FIG. 1a: in an uplink communication direction or a downlink communication direction, a period of time in which the data packet or information is successfully transmitted from a service data unit (Service Data Unit, SDU) entry point of a wireless protocol layer 2 or a wireless protocol layer 3 to an SDU exit point of the wireless protocol layer 2 or the wireless protocol layer 3, regardless of whether the terminal device or the base station is limited by discontinuous reception (Discontinuous Reception, DRX).

Specifically, in the uplink communication direction, the SDU entry point of the wireless protocol layer 2 or the wireless protocol layer 3 is the PDCP layer of the terminal device shown in FIG. 1a, and the SDU exit point of the wireless protocol layer 2 or the wireless protocol layer 3 is the PDCP layer of an evolved NodeB (evolved Node B, eNB) shown in FIG. 1. In the downlink communication direction, the SDU entry point of the wireless protocol layer 2 or the wireless protocol layer 3 is the PDCP layer of the eNB shown in FIG. 1, and the SDU exit point of the wireless protocol layer 2 or the wireless protocol layer 3 is the PDCP layer of the terminal device shown in FIG. 1a.

It should be understood that the embodiments of this application may be applied to but is not limited to the NR system.

It should be understood that, in the embodiments of this application, when a first device is a network device, a second device is a terminal device; when the first device is a terminal device, the second device is a network device.

Specifically, the network device in the embodiments of this application may be a base station, an access point, or a device in communication with a wireless terminal by using one or more sectors at an air interface in an access network. When the network device is a base station, the base station may be configured to mutually convert a received over-the-air frame and an IP packet, and serve as a router between a wireless terminal and a remaining part of the access network, where the remaining part of the access network may include an IP network. The base station may also be configured to coordinate attribute management of the air interface. For example, the base station may be a base transceiver station (Base Transceiver Station, BTS) in a GSM system or a CDMA system, may be a NodeB (NodeB) in a wideband code division multiple access (Wideband Code Division Multiple Access, WCDMA) system, or may be an eNB in an LTE system. This is not limited in the embodiments of this application.

The terminal device in the embodiments of this application may be a device that provides a user with voice and/or data connectivity, a handheld device with a wireless connection function, or another processing device connected to a wireless modem. The terminal device may alternatively be a wireless terminal. The wireless terminal may communicate with one or more core networks by using a radio access network (Radio Access Network, RAN). The wireless terminal may be a mobile terminal, such as a mobile phone (also referred to as a "cellular" phone) and a computer with a mobile terminal. The computer with a mobile terminal, for example, may be a portable, pocket-sized, handheld, computer built-in, or vehicle-mounted mobile apparatus, which exchanges voice and/or data with the radio access network. For example, the wireless terminal may alternatively be a device such as a personal communication service (Personal Communication Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal may also be called a system, a subscriber unit (Subscriber Unit), a subscriber station (Subscriber Station), a mobile station (Mobile Station), a mobile console (Mobile), a remote station (Remote Station), an access point (Access Point, AP), a remote terminal (Remote Terminal), an access terminal (Access Terminal), a user terminal (User Terminal), a user agent (User Agent), a user device (User Device), or user equipment (User Equipment). The embodiments of this application are not limited thereto.

The following describes the embodiments of this application in detail with reference to the accompanying drawings of this specification.

As shown in FIG. 2, a data packet sending and receiving method in an embodiment of this application includes the following steps.

Step 200: A second device determines first time information that a data packet arrives at a PDCP layer of the second device.

Step 210: The second device sends the data packet to a first device, where the data packet includes the first time information.

Step 220: After receiving the data packet, the first device determines second time information that the data packet leaves a PDCP layer of the first device.

Step 230: The first device determines a transmission delay of the data packet between the second device and the first device based on the first time information and the second time information.

In this embodiment of this application, it is determined that the transmission delay of the data packet between the second device and the first device meets a transmission delay of a data packet defined in an NR system. Therefore, when the technical solution in this embodiment of this application is applied to the NR system, accuracy of measurement of the transmission delay of the data packet is improved.

It should be noted that, in this embodiment of this application, when being specifically implemented, the first time information and the second time information may be implemented in a form of a timestamp, or in another form. This is not limited in this embodiment of this application.

It should be understood that the first time information in this embodiment of this application includes first absolute time information or first relative time information, and the second time information includes second absolute time information or second relative time information.

Relative time information may be indicated by using frame information, for example, a radio frame number, a sub frame number, and an offset. The relative time information may include the radio frame number, the subframe number, and the offset. Alternatively, the relative time information may be other information used to indicate a radio frame number, a subframe number, and an offset, such as a sequence. This is not limited in this embodiment of this application.

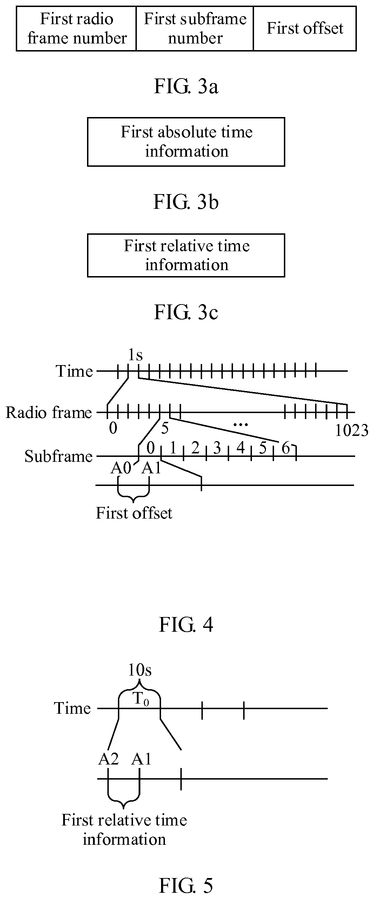

For example, formats used for the first time information in this embodiment of this application are shown in FIG. 3a to FIG. 3c.

As shown in FIG. 3a, the first time information includes a first offset, and a first radio frame number and a first subframe number that are used when the data packet is received at the PDCP layer of the second device, and the first offset is used to indicate an offset of the data packet in a subframe identified by the first subframe number.

It should be noted that the subframe identified by the first subframe number is located in a radio frame identified by the first radio frame number.

It should be further noted that a location sequence of the first offset, the first subframe number, and the first radio frame number is not limited in this embodiment of this application, and the format of the first time information shown in FIG. 3a is merely an example for description.

It is assumed that a slot structure in a communications system is shown in FIG. 4, a radio frame number cycles once in a second (s), and a specific 1s includes 1024 radio frames. The radio frames are in a one-to-one correspondence with radio frame numbers 0 to 1023, each radio frame includes seven subframes, and the subframes are in a one-to-one correspondence with subframe numbers 0 to 7. If a subframe whose subframe number is 0 in a radio frame identified by a radio frame number 5 is used to send the data packet, a start location in which the data packet is carried in the subframe is A1, and A0 is a start location of the subframe whose subframe number is 0, a size between A1 and A0 is the first offset. In a specific implementation, if a time difference between A0 and A1 is 50 microseconds ($\mu$s), the first offset may be directly represented as 50 microseconds ($\mu$s), or may be an identifier, where the identifier is corresponding to 50 $\mu$s. For example, the identifier may be a positive integer. In addition, the identifier may alternatively be other information. When the identifier is other information, an implementation is similar to the implementation in which the identifier is a positive integer. Details are not described herein again.

The format of the first time information may alternatively be shown in FIG. 3b. The first time information is the first absolute time information of the data packet received at the PDCP layer of the second device. It should be understood that the first absolute time information may be a specific moment, for example, 12: 00: 00 on May 10, 2017. The first absolute time information may alternatively be an identifier. For example, the identifier may be a positive integer, and a correspondence rule between a positive integer and a specific moment is pre-configured. In this way, after a specific time at which the data packet is received at the PDCP layer of the second device is determined, a positive integer corresponding to the specific time may be determined, and the positive integer is sent to the first device. Compared with sending a specific moment directly to the first device, this manner reduces a quantity of bits of the first time information. In addition, the identifier may alternatively be other information, such as a sequence. When the identifier is other information, an implementation is similar to the implementation in which the identifier is a positive integer. Details are not described herein again.

In addition, the format of the first time information may alternatively be shown in FIG. 3c. The first time information is the first relative time information. The first relative time information is used to indicate a interval that a first moment deviates from a first target moment, the first moment is a time at which the data packet is received at the PDCP layer of the second device, the first target moment is a start moment of a period in which the first moment is located, and duration of the period in which the first moment is located is preset duration. It should be noted that the preset duration may be specifically set based on an actual situation. This is not limited herein. It should be further noted that, in this embodiment of this application, the time at which the data packet is received at the PDCP layer of the second device is a time at which the data packet sent at an upper layer of the second device is received at the PDCP layer of the second device.

For example, as shown in FIG. 5, the preset duration is 10s, the first moment is A1, the first relative time information is a interval of A1 relative to A2, and A2 is a start moment of a period T0 in which A1 is located. In specific implementation, the first relative time information may be an actual time difference between A2 and A1. For example, if the time difference between A2 and A1 is 1s, the first relative time information may be 1s, or the first relative time information is an identifier. For example, the identifier may be a positive integer. When the time difference between A2 and A1 is 1s, 1s corresponds to a positive integer N0, the first relative time information is N0, and a correspondence rule between a positive integer and a relative time may be preconfigured. When the identifier is other information, an implementation is similar to the implementation in which the identifier is a positive integer. Details are not described herein again.

To enable the first device to know the format used for the first time information, optionally, the data packet further includes a first identifier, and the first identifier is used to identify the format used for the first time information.

For example, if the first identifier is a positive integer, when the first time information includes the radio frame number, the subframe number, and the offset, the first identifier is 0; when the first time information is the first absolute time information, the first identifier is 1; or when the first time information is the first relative time information, the first identifier is 2. In addition, the first identifier may further be other information such as a sequence. Details are not described herein again.

Optionally, the first time information and the first identifier are carried in a PDCP header of the data packet.

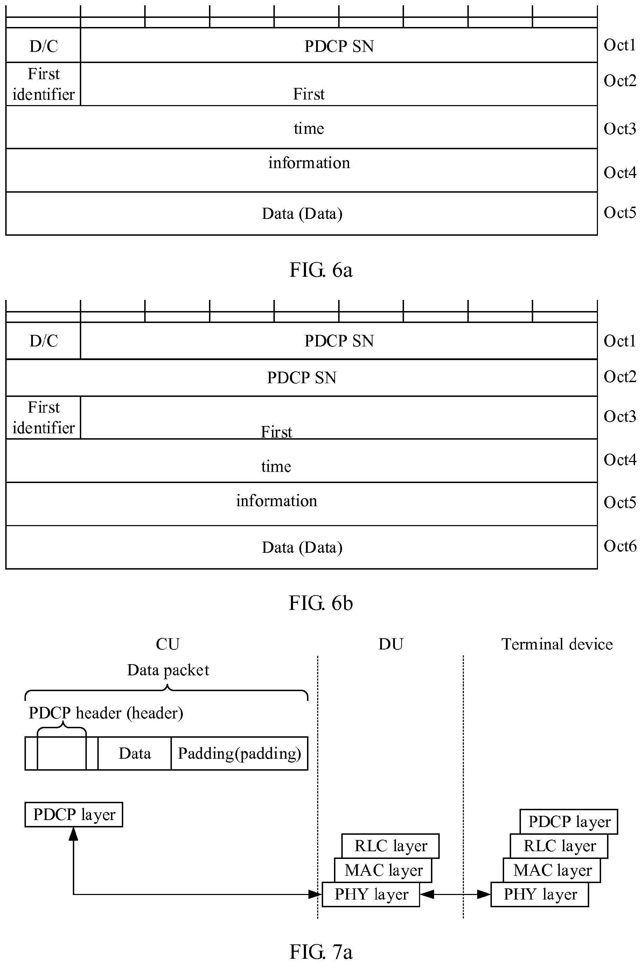

Specifically, the data packet in this embodiment of this application is a PDCP protocol data unit (Protocol Data Unit, PDU). Therefore, the PDCP header is also referred to as a PDCP PDU header. For example, when a PDCP sequence number in the data packet is a short sequence number, a format of the data packet may be shown in FIG. 6a. When a PDCP sequence number in the data packet is a long sequence number, a format of the data packet may be shown in FIG. 6b. It should be noted that, in this embodiment of this application, the first time information and the first identifier may alternatively be carried in a payload part of the data packet.

A specific implementation of the second time information is similar to that of the first time information. Optionally, to facilitate calculation of a transmission delay of the data packet, when the first time information includes the first offset, and the first radio frame number and the first subframe number that are used when the data packet is received at the PDCP layer of the second device, the second time information includes a second offset, and a second radio frame number and a second subframe number that are used when the data packet is sent at the PDCP layer of the first device, and the second offset is used to indicate an offset of the data packet in a subframe identified by the second subframe number. When the first time information is the first absolute time information of the data packet received at the PDCP layer of the second device, the second time information is the second absolute time information of the data packet sent at the PDCP layer of the first device. When the first time information is the first relative time information, the second time information is the second relative time information, the second relative time information is used to indicate a interval that a second moment deviates from a second target moment, the second moment is a time at which the data packet is sent at the PDCP layer of the first device, the second target moment is a start moment of a period in which the second moment is located, and duration of the period in which the second moment is located is the preset duration. It should be noted that the first device and the second device use the same preset duration.

It should be understood that, in this embodiment of this application, that the data packet is sent at the PDCP layer of the first device means that the data packet is sent at the PDCP layer of the first device to an upper layer of the PDCP layer of the first device.

It should be noted that, in this embodiment of this application, specific implementations of the first time information and the second time information may be different. For example, when the first time information and the second time information are different, the first device may determine the transmission delay of the data packet based on the first time information and the second time information in the following manner: Specifically, the first device determines, based on the first time information, an absolute time at which the data packet is received at the PDCP layer of the second device, and determines, based on the second time information, an absolute time at which the data packet is sent at the PDCP layer of the first device, to determine the transmission delay of the data packet between the second device and the first device.

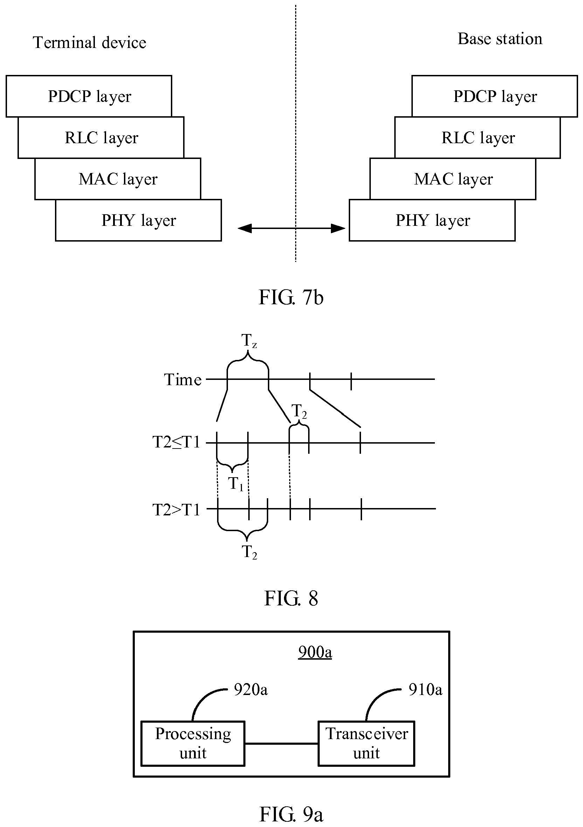

In addition, the NR system includes a cloud deployment scenario and a non-cloud deployment scenario. In the cloud deployment scenario, as shown in FIG. 7a, a PDCP layer of a base station is separated from a radio link control (Radio Link Control, RLC) layer, a media access control (Media Access Control, MAC) layer, and a physical layer (Physical Layer, PHY layer) layer, where an entity of the PDCP layer is a central unit (Central Unit, CU), and an entity including the RLC layer, the MAC layer, and the PHY layer is a distributed unit (Distributed Unit, DU). Because the PDCP layer is separated from the MAC layer, the PDCP layer cannot sense the radio frame number, the subframe number, and the offset that are used for sending or receiving the data packet. Therefore, when the second device is a base station, the first time information may be absolute time information, or may be predefined relative time information. When the first device is a base station, the second time information may be absolute time information, or may be predefined relative time information. In the non-cloud deployment scenario, as shown in FIG. 7b, the PDCP layer of the base station is not separated from the RLC layer, the MAC layer, and the PHY layer. Therefore, the PDCP layer of the base station can sense the radio frame number, the subframe number, and the offset that are used for sending or receiving the data packet. Therefore, when the second device is a base station, the first time information may be the radio frame number, the subframe number, and the offset that are used for sending the data packet, may be absolute time information, or may be predefined relative time information. When the first device is a base station, the second time information may be the radio frame number, the subframe number, and the offset that are used when the data packet is sent at the PDCP layer of the first device, may be absolute time information, or may be predefined relative time information.

For example, when both the first time information and the second time information are represented by using the radio frame number, the subframe number, and the offset, the first device may determine the transmission delay of the data packet between the second device and the first device in the following manner:

$$
T = \begin{cases} (SFN_2 - SFN_1) \times T_f + (SSFN_2 - SSFN_1) \times T_{sf} + (SOFF_2 - SOFF_1) & SFN_2 \geq SFN_1; \\ T_0 + (SFN_2 - SFN_1) \times T_f + (SSFN_2 - SSFN_1) \times T_{sf} + (SOFF_2 - SOFF_1) & SFN_2 < SFN_1. \end{cases}
$$

where $T$ is the transmission delay of the data packet between the second device and the first device, $SFN_1$ is the first radio frame number, $SSFN_1$ is the first subframe number, $SOFF_1$ is the first offset, $SFN_2$ is the second radio frame number, $SSFN_2$ is the second subframe number, $SOFF_2$ is the second offset, $T_f$ is duration of a radio frame, $T_{sf}$ is duration of a subframe, and $T_0$ is duration used for one cycle of a radio frame number.

For example, when $SFN_1$ meets $SFN_1 = 4$, $SSFN_1$ meets $SSFN_1 = 3$, $SOFF_1$ meets $SOFF_1 = 0$, $SFN_2$ meets $SFN_2 = 6$, $SSFN_2$ meets $SSFN_2 = 4$, and $SOFF_2$ meets $SOFF_2 = 0$, the first device determines that the radio frame number $SFN_1$ and the radio frame number $SFN_2$ number are in a cycle period of the radio frame numbers, and $T$ meets $T = (6-4) \times T_f + (4-3) \times T_{sf} + (0-0) = 2T_f + T_{sf}$; or when $SFN_1$ meets $SFN_1 = 4$, $SSFN_1$ meets $SSFN_1 = 3$, $SOFF_1$ meets $SOFF_1 = 0$, $SFN_2$ meets $SFN_2 = 2$, $SSFN_2$ meets $SSFN_2 = 4$, and $SOFF_2$ meets $SOFF_2 = 0$, the first device determines that the radio frame number $SFN_1$ and the radio frame number $SFN_2$ are separately in two cycle periods of the radio frame numbers, and $T$ meets $T = T_0 + (2-4) \times T_f + (4-3) \times T_{sf} + (0-0) = T_0 - 2T_f + T_{sf}$.

It should be noted that, generally, when $SFN_2$ is less than $SFN_1$, the first device considers that there is one-period difference between a period in which $SFN_2$ is located and a period in which $SFN_1$ is located, and when a period difference between $SFN_2$ and $SFN_1$ is greater than one period, the first device is likely to unable to receive the data packet. To enable the first device to more accurately determine periods of radio frame numbers of radio frames in which $SFN_2$ and $SFN_1$ are located, a parameter of the period of the radio frame number is carried in the data packet, for example, a parameter of the period of the radio frame number is added to the first time information.

When the first time information and the second time information are represented by using the predefined relative time information, if the relative time information is a time offset, the first device may determine the transmission delay of the data packet between the second device and the first device in the following manner:

$$
T = \begin{cases} T_2 - T_1 & T_2 > T_1; \\ T_z + (T_2 - T_1) & T_2 \leq T_1. \end{cases}
$$

where $T$ is the transmission delay of the data packet between the second device and the first device, $T_1$ is the first relative time information, $T_2$ is the second relative time information, and $T_z$ is the preset duration.

For example, as shown in FIG. 8, the radio frame number cycles once every $T_z$, $T_1$ is the first relative time information, and $T_2$ is the second relative time information. When $T_2$ and $T_1$ meets $T_2 \leq T_1$, the second target moment B is a start moment of an (N+1)<sup>th</sup> period, or when $T_2$ and $T_1$ meets $T_2 > T_1$, the second target moment is a start moment of an N<sup>th</sup> period, where duration of the period is the preset duration, and the preset duration may be set based on an actual situation.

When both the first time information and the second time information are represented by using absolute time, the transmission delay of the data packet between the second device and the first device is:

$$T = T_2 - T_1,$$

where $T$ is an air interface delay of the data packet, $T_1$ is the first absolute time information, and $T_2$ is the second absolute time information.

In addition, it should be noted that, in a downlink communication direction, the second device is a base station, and the first device is a terminal device. After the terminal device acknowledges the transmission delay of the data packet between the second device and the first device. To facilitate the base station to evaluate a downlink data packet transmission delay, the terminal device reports the transmission delay of the data packet to the base station. Specifically, the terminal device may report the delay at a service packet level, or may report the delay periodically or statistically of an event. For example, when reporting the delay at the service packet level, the terminal device may report a transmission delay of a data packet to the base station every time the terminal device determines the transmission delay of the data packet. When reporting the transmission delay periodically, the terminal device may report, once every preset duration, transmission delays of data packets determined by the terminal device. When reporting the transmission delay statistically of an event, the terminal device may report a transmission delay of each data packet to the base station after the terminal device determines a transmission delay of a data packet the meets a preset quantity. In addition, when reporting the transmission delay statistically of an event, the terminal device may further be triggered by a specific event to report the transmission delay of the data packet to the base station. For example, the terminal device determines, within a continuous period of time, that the transmission delay of the data packet is not greater than a specific threshold. The specific threshold may be sent by the network device to the terminal device, or may be preset in the terminal device. This is not limited herein.

The base station collects statistics about transmission delays of data packets in uplink communication direction or the downlink communication direction, and may present the statistics by using a log or traffic statistics.

Based on a same concept, an embodiment of this application further provides a data packet receiving device, and the device is configured to perform an action or a function of the first device in the foregoing method embodiment.

Based on a same concept, an embodiment of this application further provides a data packet sending device, and the device is configured to perform an action or a function of the second device in the foregoing method embodiment.

An embodiment of this application further provides a communications system, including the data packet sending device and the data packet receiving device in the foregoing embodiments.

For brevity, for content of an apparatus part, specifically refer to the method embodiments. Details are not repeatedly described.

As shown in FIG. 9a, a data packet receiving device 900a in an embodiment of this application includes a transceiver unit 910a and a processing unit 920a. The transceiver unit 910a is configured to receive a data packet sent by a second device, and the data packet includes first time information that the data packet arrives at a packet data convergence protocol PDCP layer of the second device. The processing unit 920a is configured to: determine second time information that the data packet leaves the PDCP layer of the device, and determine a transmission delay of the data packet between the second device and the device based on the first time information and the second time information.

In a possible design, the first time information includes first absolute time information or first relative time information. The second time information includes second absolute time information or second relative time information.

In a possible design, the first relative time information includes a first offset, and a first radio frame number and a first subframe number that are used when the data packet is received at the PDCP layer of the second device, and the first offset is used to indicate an offset of the data packet in a subframe identified by the first subframe number.

In a possible design, the first relative time information is used to indicate a interval that a first moment deviates from a first target moment, the first moment is a time at which the data packet is received at the PDCP layer of the second device, the first target moment is a start moment of a period in which the first moment is located, and duration of the period in which the first moment is located is preset duration.

In a possible design, the second relative time information includes a second offset, and a second radio frame number and a second subframe number that are used when the data packet is sent at the PDCP layer of the device 900a, and the second offset is used to indicate an offset of the data packet in a subframe identified by the second subframe number.

In a possible design, the transmission delay $T$ of the data packet between the second device and the device 900a meets the following expression:

$$T = \begin{cases} (SFN_2 - SFN_1) \times T_f + (SSFN_2 - SSFN_1) \times T_{sf} + (SOFF_2 - SOFF_1) & SFN_2 \geq SFN_1; \\ T_0 + (SFN_2 - SFN_1) \times T_f + (SSFN_2 - SSFN_1) \times T_{sf} + (SOFF_2 - SOFF_1) & SFN_2 < SFN_1. \end{cases},$$

where $SFN_1$ is the first radio frame number, $SSFN_1$ is the first subframe number, $SOFF_1$ is the first offset, $SFN_2$ is the second radio frame number, $SSFN_2$ is the second subframe number, $SOFF_2$ is the second offset, $T_f$ is duration of a radio frame, $T_{sf}$ is duration of a subframe, and $T_0$ is duration used for one cycle of a radio frame number.

In a possible design, the second relative time information is used to indicate a interval that a second moment deviates from a second target moment, the second moment is a time at which the data packet is sent at the PDCP layer of the device, the second target moment is a start moment of a period in which the second moment is located, and duration of the period in which the second moment is located is the preset duration.

In a possible design, the transmission delay $T$ of the data packet between the second device and the device 900a meets the following expression:

$$T = \begin{cases} T_2 - T_1 & T_2 > T_1; \\ T_z + (T_2 - T_1) & T_2 \leq T_1. \end{cases},$$

where $T_1$ is the first relative time information, $T_2$ the second relative time information, and $T_z$ is the preset duration.

In a possible design, the data packet further includes a first identifier. The first identifier is used to identify a format used for the first time information.

The processing unit 920a is configured to determine, based on the format that is used for the first time information and that is identified by the first identifier, the second time information that the data packet leaves the PDCP layer of the device.

In a possible design, the first time information and the first identifier are carried in a PDCP header of the data packet.

In a possible design, when the device 900a is a terminal device and the second device is a network device, the transceiver unit 910a is further configured to send the transmission delay to the second device.

It should be noted that, in this embodiment of this application, the processing unit 920a may be implemented by a processor, and the transceiver unit 910a may be implemented by a transceiver. Specifically, the transceiver includes a receiver and a transmitter, the receiver is configured to receive a signal or data, and the transmitter is configured to send a signal or data.

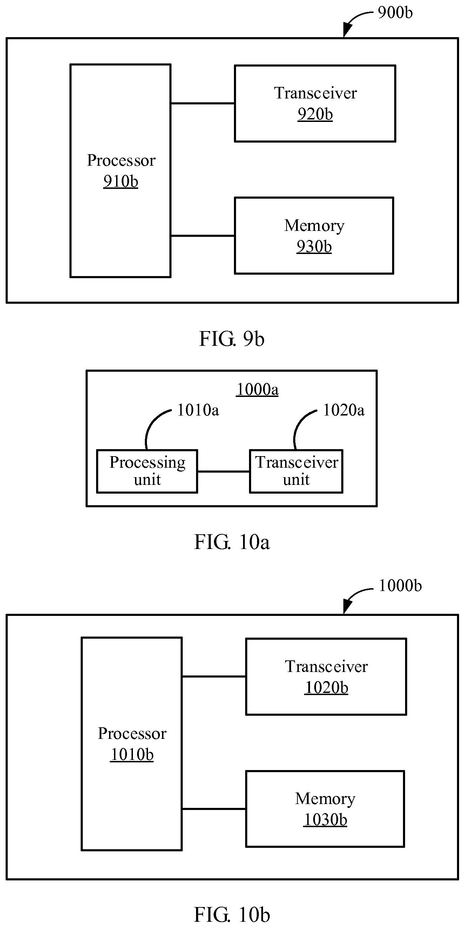

FIG. 9b is a schematic structural diagram of hardware of a data packet receiving device 900b according to an embodiment of this application. The device 900b may include a processor 910b, a transceiver 920b, and a memory 930b. The memory 930b may be configured to store a program/code pre-installed when the device 900b is delivered from a factory, or may store code executed by the processor 910b, or the like.

The processor 910b may be a general-purpose central processing unit (Central Processing Unit, CPU), a microprocessor, an application-specific integrated circuit (Application Specific Integrated Circuit, ASIC), or one or more integrated circuits, and is configured to perform a related operation, to implement technical solutions provided in the embodiments of this application.

It should be noted that although only the processor 910b, the transceiver 920b, and the memory 930b are shown in the device 900b shown in FIG. 9b, in a specific implementation process, persons skilled in the art should understand that the device 900b further includes another component required for implementing normal running. In addition, based on a specific requirement, persons skilled in the art should understand that the device 900b may further include hardware components for implementing other additional functions. In addition, persons skilled in the art should understand that the device 900b may include only components or modules essential for implementing this embodiment of this application, but not necessarily include all the components shown in FIG. 9b.

Persons of ordinary skill in the art may understand that all or some of the processes of the methods in the embodiments may be implemented by a computer program instructing related hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM), and or the like.

As shown in FIG. 10a, a data packet sending device 1000a in an embodiment of this application includes a processing unit 1010a and a transceiver unit 1020a. The processing unit 1010a is configured to determine first time information that a data packet arrives at a packet data convergence protocol PDCP layer of the device. The transceiver unit 1020a is configured to send the data packet to a first device, where the data packet includes the first time information, so that the first device determines a transmission delay of the data packet between the device and the first device based on the first time information.

In a possible design, the first time information includes first absolute time information or first relative time information.

In a possible design, the first relative time information includes a first offset, and a first radio frame number and a first subframe number that are used when the data packet is received at the PDCP layer of the device, and the first offset is used to indicate an offset of the data packet in a subframe identified by the first subframe number.

In a possible design, the first relative time information is used to indicate a interval that a first moment deviates from a first target moment, the first moment is a time at which the data packet is received at the PDCP layer of the device, the first target moment is a start moment of a period in which the first moment is located, and duration of the period in which the first moment is located is preset duration.

In a possible design, the data packet further includes a first identifier. The first identifier is used to identify a format used for the first time information.

In a possible design, the first time information and the first identifier are carried in a PDCP header of the data packet.

In a possible design, when the first device is a terminal device and the device is a network device, the transceiver unit 1020a is further configured to: receive the transmission delay of the data packet that is between the first device and the second device and that is sent by the first device, and present the transmission delay in a form of a log or traffic statistics.

It should be noted that, in this embodiment of this application, the processing unit 1010a may be implemented by a processor, and the transceiver unit 1020a may be implemented by a transceiver. Specifically, the transceiver includes a receiver and a transmitter, the receiver is configured to receive a signal or data, and the transmitter is configured to send a signal or data.

FIG. 10b is a schematic structural diagram of hardware of a data packet sending device 1000b according to an embodiment of this application. The device 1000b may include a processor 1010b, a transceiver 1020b, and a memory 1030b. The memory 1030b may be configured to store a program/code pre-installed when the device 1000b is delivered from a factory, or may store code executed by the processor 1010b, or the like.

The processor 1010b may be a general-purpose CPU, a microprocessor, an ASIC, or one or more integrated circuits, and is configured to perform a related operation, to implement technical solutions provided in the embodiments of this application.

It should be noted that although only the processor 1010b, the transceiver 1020b, and the memory 1030b are shown in the device 1000b shown in FIG. 10b, in a specific implementation process, persons skilled in the art should understand that the device 1000b further includes another component required for implementing normal running. In addition, based on a specific requirement, persons skilled in the art should understand that the device 1000b may further include hardware components for implementing other additional functions. In addition, persons skilled in the art should understand that the device 1000b may include only components or modules essential for implementing this embodiment of this application, but not necessarily include all the components shown in FIG. 10b.

Persons of ordinary skill in the art may understand that all or some of the processes of the methods in the embodiments may be implemented by a computer program instructing related hardware. The program may be stored in a computer readable storage medium. When the program runs, the processes of the methods in the embodiments are performed. The storage medium may be a magnetic disk, an optical disk, a ROM or RAM, and the like.

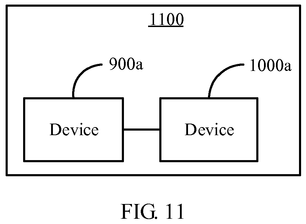

As shown in FIG. 11, a communications system 1100 in an embodiment of this application includes the device 900a shown in FIG. 9a and the device 1000a shown in FIG. 10a.

The devices shown in FIG. 9a, FIG. 9b, FIG. 10a, and FIG. 10b are specifically described by using an example in which a first wireless protocol layer is a PDCP layer and a second wireless protocol layer is a PDCP layer. When the first wireless protocol layer is an SDAP layer, and the second wireless protocol layer is an SDAP layer, or the first wireless protocol layer and the second wireless protocol layer each are another layer, a manner of determining an air interface delay is similar. Details are not described herein again.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specific function in one or more processes in the flowcharts and/or in one or more blocks in the block diagrams.

These computer program instructions may alternatively be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some possible embodiments of this application have been described, persons skilled in the art can make changes and modifications to these embodiments once they learn the basic inventive concept. Therefore, the following claims are intended to be construed as to cover the embodiments of this application and all changes and modifications falling within the scope of this application.

Obviously, persons skilled in the art can make various modifications and variations to this application without departing from the spirit and scope of this application. This application is intended to cover these modifications and variations of this application provided that they fall within the scope of protection defined by the following claims and their equivalent technologies.

**Claims**

1.  A data packet receiving method, comprising:

    receiving, by a first device, a data packet sent by a second device, wherein the data packet comprises first time information, the first time information is used to indicate a time at which the data packet arrives at a first wireless protocol layer, the first wireless protocol layer is located in a user plane protocol stack of the second device, and a header of the data packet is a header of the first wireless protocol layer;
    determining, by the first device, second time information, wherein the second time information is used to indicate a time at which the data packet leaves a second wireless protocol layer, the second wireless protocol layer is located in a user plane protocol stack of the first device, and the header of the data packet is parsed at the second wireless protocol layer; and
    determining, by the first device, a transmission delay of the data packet between the second device and the first device based on the first time information and the second time information.

2.  The method according to claim 1, wherein the first wireless protocol layer is a packet data convergence protocol PDCP layer of the second device, and the second wireless protocol layer is a PDCP layer of the first device; or the first wireless protocol layer is a service data adaptation protocol SDAP layer of the second device, and the second wireless protocol layer is an SDAP layer of the first device.

3.  The method according to claim 1 or 2, wherein the first time information comprises first absolute time information or first relative time information; and the second time information comprises second absolute time information or second relative time information.

4.  The method according to claim 3, wherein the first relative time information comprises a first offset, and a first radio frame number and a first subframe number that are used when the data packet is received at the first wireless protocol layer, and the first offset is used to indicate an offset of the data packet in a subframe identified by the first subframe number.

5. The method according to claim 3, wherein the first relative time information is used to indicate a interval that a first moment deviates from a first target moment, the first moment is a time at which the data packet is received at the first wireless protocol layer, the first target moment is a start moment of a period in which the first moment is located, and duration of the period in which the first moment is located is preset duration.

6. The method according to any one of claims 3 to 5, wherein the second relative time information comprises a second offset, and a second radio frame number and a second subframe number that are used when the data packet is sent at the second wireless protocol layer, and the second offset is used to indicate an offset of the data packet in a subframe identified by the second subframe number.

7. The method according to any one of claims 1 to 6, wherein the transmission delay $T$ of the data packet between the second device and the first device meets the following expression:

$$T = \begin{cases} (SFN_2 - SFN_1) \times T_f + (SSFN_2 - SSFN_1) \times T_{sf} + (SOFF_2 - SOFF_1) & SFN_2 \geq SFN_1; \\ T_0 + (SFN_2 - SFN_1) \times T_f + (SSFN_2 - SSFN_1) \times T_{sf} + (SOFF_2 - SOFF_1) & SFN_2 < SFN_1. \end{cases},$$

wherein $SFN_1$ is the first radio frame number, $SSFN_1$ is the first subframe number, $SOFF_1$ is the first offset, $SFN_2$ is the second radio frame number, $SSFN_2$ is the second subframe number, $SOFF_2$ is the second offset, $T_f$ is duration of a radio frame, $T_{sf}$ is duration of a subframe, and $T_0$ is duration used for one cycle of a radio frame number.

8. The method according to any one of claims 3 to 5, wherein the second relative time information is used to indicate a interval that a second moment deviates from a second target moment, the second moment is a time at which the data packet is sent at the second wireless protocol layer, the second target moment is a start moment of a period in which the second moment is located, and duration of the period in which the second moment is located is the preset duration.

9. The method according to any one of claims 1 to 3 and claims 5 and 8, wherein the transmission delay $T$ of the data packet between the second device and the first device meets the following expression:

$$T = \begin{cases} T_2 - T_1 & T_2 > T_1; \\ T_z + (T_2 - T_1) & T_2 \leq T_1. \end{cases},$$

wherein $T_1$ is the first relative time information, $T_2$ the second relative time information, and $T_z$ is the preset duration.

10. The method according to any one of claims 1 to 9, wherein the data packet further comprises a first identifier; and
the first identifier is used to identify a format used for the first time information; and
the determining, by the first device, second time information comprises:
determining, by the first device, the second time information based on the format that is used for the first time information and that is identified by the first identifier.

11. A data packet sending method, comprising:

determining, by a second device, first time information, wherein the first time information is used to indicate a time at which a data packet arrives at a first wireless protocol layer, the first wireless protocol layer is located in a user plane protocol stack of the second device, and a header of the data packet is a header of the first wireless protocol layer; and
sending, by the second device, the data packet to a first device, wherein the data packet comprises the first time information.

12. The method according to claim 11, wherein the first wireless protocol layer is a packet data convergence protocol PDCP layer of the second device; or
the first wireless protocol layer is a service data adaptation protocol SDAP layer of the second device.

13. The method according to claim 11 or 12, wherein the first time information comprises first absolute time information or first relative time information.

14. The method according to claim 13, wherein the first relative time information comprises a first offset, and a first radio frame number and a first subframe number that are used when the data packet is received at the first wireless protocol layer, and the first offset is used to indicate an offset of the data packet in a subframe identified by the first subframe number.

15. The method according to claim 13, wherein the first relative time information is used to indicate a interval that a first moment deviates from a first target moment, the first moment is a time at which the data packet is received at the first wireless protocol layer, the first target moment is a start moment of a period in which the first moment is located, and duration of the period in which the first moment is located is preset duration.

16. A first device, comprising:

a transceiver, configured to receive a data packet sent by a second device, wherein the data packet comprises first time information, the first time information is used to indicate a time at which the data packet arrives at a first wireless protocol layer, the first wireless protocol layer is located in a user plane protocol stack of the second device, and a header of the data packet is a header of the first wireless protocol layer; and
a processor, configured to: determine second time information, and determine a transmission delay of the data packet between the second device and the first device based on the first time information and the second time information, wherein the second time information is used to indicate a time at which the data packet leaves a second wireless protocol layer, the second wireless protocol layer is located in a user plane protocol stack of the first device, and the header of the data packet is parsed at the second wireless protocol layer.

17. The first device according to claim 16, wherein the first wireless protocol layer is a packet data convergence protocol PDCP layer of the second device, and the second wireless protocol layer is a PDCP layer of the first device; or the first wireless protocol layer is a service data adaptation protocol SDAP layer of the second device, and the second wireless protocol layer is an SDAP layer of the first device.

18. The first device according to claim 16 or 17, wherein the first time information comprises first absolute time information or first relative time information; and the second time information comprises second absolute time information or second relative time information.

19. The first device according to claim 18, wherein the first relative time information comprises a first offset, and a first radio frame number and a first subframe number that are used when the data packet is received at the first wireless protocol layer, and the first offset is used to indicate an offset of the data packet in a subframe identified by the first subframe number.

20. The first device according to claim 18, wherein the first relative time information is used to indicate a interval that a first moment deviates from a first target moment, the first moment is a time at which the data packet is received at the first wireless protocol layer, the first target moment is a start moment of a period in which the first moment is located, and duration of the period in which the first moment is located is preset duration.

21. The first device according to any one of claims 18 to 20, wherein the second relative time information comprises a second offset, and a second radio frame number and a second subframe number that are used when the data packet is sent at the second wireless protocol layer, and the second offset is used to indicate an offset of the data packet in a subframe identified by the second subframe number.

22. The first device according to any one of claims 16 to 21, wherein the transmission delay $T$ of the data packet between the second device and the first device meets the following expression:

$$T = \begin{cases} (SFN_2 - SFN_1) \times T_f + (SSFN_2 - SSFN_1) \times T_{sf} + (SOFF_2 - SOFF_1) & SFN_2 \geq SFN_1; \\ T_0 + (SFN_2 - SFN_1) \times T_f + (SSFN_2 - SSFN_1) \times T_{sf} + (SOFF_2 - SOFF_1) & SFN_2 < SFN_1. \end{cases}$$

wherein $SFN_1$ is the first radio frame number, $SSFN_1$ is the first subframe number, $SOFF_1$ is the first offset, $SFN_2$ is the second radio frame number, $SSFN_2$ is the second subframe number, $SOFF_2$ is the second offset, $T_f$ is duration of a radio frame, $T_{sf}$ is duration of a subframe, and $T_0$ is duration used for one cycle of a radio frame number.

23. The first device according to any one of claims 18 to 20, wherein the second relative time information is used to indicate a interval that a second moment deviates from a second target moment, the second moment is a time at which the data packet is sent at the second wireless protocol layer, the second target moment is a start moment of a period in which the second moment is located, and duration of the period in which the second moment is located is the preset duration.

24. The first device according to any one of claims 16 to 18 and claims 20 and 23, wherein the transmission delay $T$ of the data packet between the second device and the first device meets the following expression:

$$T = \begin{cases} T_2 - T_1 & T_2 > T_1; \\ T_z + (T_2 - T_1) & T_2 \leq T_1. \end{cases}$$,

wherein $T_1$ is the first relative time information, $T_2$ the second relative time information, and $T_z$ is the preset duration.

25. The first device according to any one of claims 16 to 24, wherein the data packet further comprises a first identifier; and the first identifier is used to identify a format used for the first time information; and that the processor is configured to determine the second time information specifically comprises: the processor is configured to determine the second time information based on the format that is used for the first time information and that is identified by the first identifier.

26. A second device, comprising:

a processor, configured to determine first time information, wherein the first time information is used to indicate a time at which a data packet arrives at a first wireless protocol layer, the first wireless protocol layer is located in a user plane protocol stack of the second device, and a header of the data packet is a header of the first wireless protocol layer; and a transceiver, configured to send the data packet to a first device, wherein the data packet comprises the first time information.

27. The second device according to claim 26, wherein the first wireless protocol layer is a packet data convergence protocol PDCP layer of the second device; or the first wireless protocol layer is a service data adaptation protocol SDAP layer of the second device.

28. The second device according to claim 26 or 27, wherein the first time information comprises first absolute time information or first relative time information.

29. The second device according to claim 28, wherein the first relative time information comprises a first offset, and a first radio frame number and a first subframe number that are used when the data packet is received at the first wireless protocol layer, and the first offset is used to indicate an offset of the data packet in a subframe identified by the first subframe number.

30. The second device according to claim 28, wherein the first relative time information is used to indicate a interval that a first moment deviates from a first target moment, the first moment is a time at which the data packet is received at the first wireless protocol layer, the first target moment is a start moment of a period in which the first moment is located, and duration of the period in which the first moment is located is preset duration.

31. A communications system, comprising the first device according to any one of claims 16 to 25 and the second device according to any one of claims 26 to 30.

Terminal device                                                        eNB

```
┌─────────────────────┐                          ┌─────────────────────┐
│ TCP/IP/Other (other)│                          │ TCP/IP/Other (other)│
└─────────────────────┘                          └─────────────────────┘

│   ↑   SDAP    │                                 │   ↑   SDAP    │
│       PDCP    │                                 │       PDCP    │
│       RLC     │                                 │       RLC     │
│       MAC     │                                 │       MAC     │
│       PHY     │                                 │       PHY     │
```

Uplink air interface delay

Downlink air interface delay

FIG. 1a

Terminal deive

TCP/IP/Other (other)

PDCP

RLC

MAC

PHY

Uplink air interface delay

Downlink air interface delay

eNB

TCP/IP/Other (other)

PDCP

RLC

MAC

PHY

FIG. 1b

First device

Second device

Step 200: Determine first time information

Step 210: Data packet (first time information)

Step 220: Determine second time information

Step 230: Determine a transmission delay of the data packet between the second device and the first device

FIG. 2

| First radio frame number | First subframe number | First offset |
|---|---|---|

FIG. 3a

| First absolute time information |
|---|

FIG. 3b

| First relative time information |
|---|

FIG. 3c

FIG. 4

FIG. 5

| D/C | PDCP SN | | | | | | | Oct1 |
|---|---|---|---|---|---|---|---|---|
| First identifier | First | | | | | | | Oct2 |
| time | | | | | | | | Oct3 |
| information | | | | | | | | Oct4 |
| Data (Data) | | | | | | | | Oct5 |

FIG. 6a

| D/C | PDCP SN | | | | | | | Oct1 |
|---|---|---|---|---|---|---|---|---|
| PDCP SN | | | | | | | | Oct2 |
| First identifier | First | | | | | | | Oct3 |
| time | | | | | | | | Oct4 |
| information | | | | | | | | Oct5 |
| Data (Data) | | | | | | | | Oct6 |

FIG. 6b

FIG. 7a

Terminal device                              Base station

| PDCP layer | | PDCP layer |
| RLC layer | | RLC layer |
| MAC layer | | MAC layer |
| PHY layer | ←→ | PHY layer |

FIG. 7b

FIG. 8

900a

920a                    910a

| Processing unit | | Transceiver unit |

FIG. 9a

900b

Processor
910b

Transceiver
920b

Memory
930b

FIG. 9b

1000a

1010a

1020a

Processing
unit

Transceiver
unit

FIG. 10a

1000b

Processor
1010b

Transceiver
1020b

Memory
1030b

FIG. 10b

FIG. 11

## INTERNATIONAL SEARCH REPORT

| International application No. |
| --- |
| PCT/CN2018/077935 |

**A. CLASSIFICATION OF SUBJECT MATTER**

H04W 24/00 (2009.01) i; H04L 29/06 (2006.01) i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

USTXT; CNTXT; CNABS; CNKI; VEN; 3GPP: 数据包, 时延, 时间, 报头, 用户面, 分组数据融合协议, 业务数据适配协议, 新无线通信, 五代无线通信, packet, delay, latency, time, header, user plane, PDCP, packet data convergence protocol, SDAP, service data adaptation protocol, 5G, 5 generation, new radio, NR

**C. DOCUMENTS CONSIDERED TO BE RELEVANT**

| Category* | Citation of document, with indication, where appropriate, of the relevant passages | Relevant to claim No. |
| --- | --- | --- |
| X | CN 106162685 A (ZTE CORP.), 23 November 2016 (23.11.2016), description, paragraphs [0054]-[0143] | 1-31 |
| X | WO 2016159541 A1 (LG ELECTRONICS INC.), 06 October 2016 (06.10.2016), description, paragraphs [56]-[131] | 1-31 |
| A | CN 106464398 A (QUALCOMM INC.), 22 February 2017 (22.02.2017), entire document | 1-31 |
| A | CN 106162728 A (ZTE CORP.), 23 November 2016 (23.11.2016), entire document | 1-31 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 May 2018 | 07 June 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Wei<br><br>Telephone No. 86-(010)-62089544 |

Form PCT/ISA/210 (second sheet) (January 2015)

## INTERNATIONAL SEARCH REPORT
### Information on patent family members

| International application No. |
| --- |
| PCT/CN2018/077935 |

| Patent Documents referred in the Report | Publication Date | Patent Family | Publication Date |
| --- | --- | --- | --- |
| CN 106162685 A | 23 November 2016 | WO 2016155292 A1 | 06 October 2016 |
| WO 2016159541 A1 | 06 October 2016 | US 2018041413 A1 | 08 February 2018 |
| CN 106464398 A | 22 February 2017 | US 2016006526 A1 | 07 January 2016 |
| | | JP 2017521027 A | 27 July 2017 |
| | | KR 20170027730 A | 10 March 2017 |
| | | WO 2016004099 A1 | 07 January 2016 |
| | | EP 3164955 A1 | 10 May 2017 |
| | | IN 201647040340 A | 26 May 2017 |
| | | BR 112017000067 A2 | 14 November 2018 |
| CN 106162728 A | 23 November 2016 | WO 2016155457 A1 | 06 October 2016 |
| | | US 2018077594 A1 | 15 March 2018 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710385247

- CN 201710977122 X